# EUROPEAN PATENT SPECIFICATION

(11) **EP 3 322 866 B1**
(45) Date of publication and mention of the grant of the patent: **27.10.2021**
(21) Application number: 16747870.0
(22) Date of filing: 14.07.2016
(51) Int. Cl.: E04G 21/00, F03D 1/00, B29C 70/30, B29C 33/70, B29C 70/54, B29C 33/00, E04G 5/06, E04G 5/14, F03D 1/06

(54) **SCAFFOLD FOR A WIND TURBINE BLADE MOULD TOOL**
ARBEITSBÜHNE FÜR EINE WERKZEUGFORM EINES WINDENERGIE-ROTORBLATTS
PLATE-FORME DE TRAVAIL POUR UNE MOULE DE PALE DE ROTOR D'UNE EOLIENNE

(30) Priority: 15.07.2015 GB 201512366
(43) Date of publication of application: 23.05.2018
(73) Proprietor: LM WP Patent Holding A/S, 6000 Kolding (DK)
(72) Inventor: DUEGAARD, JENSEN, Rasmus, 6000 Kolding (DK)
(74) Representative: COPA Copenhagen Patents
(86) International application number: PCT/EP2016/066790
(87) International publication number: WO 2017/009424

(56) References cited:
- WO-A1-2014/044280
- DE-A1-102012 219 267
- US-A1- 2005 220 917
- "Peri Scaffolding Holds New Airbus A350", , 12 May 2015 (2015-05-12), XP055312545, Erding Retrieved from the Internet: URL:http://www.bi-constructionnews.com/en_ article_Peri_scaffolding_A350_fatigue_test .news [retrieved on 2016-10-20]

## Description

### Field of the Invention

The present invention relates to a mould structure for manufacturing a wind turbine blade or parts thereof. In another aspect, the present invention relates to the use of a hanging scaffold in manufacturing of a wind turbine blade or a part thereof by moulding.

### Background of the Invention

Turbine blades used for horizontal axis wind turbines may today exceed 80 metres in length and 4 metres in width. The blades are typically made from a fibre-reinforced polymer material and comprise a pressure side shell part and a suction side shell part. The cross-sectional profile of a typical blade includes an airfoil for creating an air flow leading to a pressure difference between both sides. The resulting lift force generates torque for producing electricity.

The shell parts of wind turbine blades are usually manufactured using moulds. First, a blade gel coat or primer is applied to the mould. Subsequently, fibre reinforcement and or fabrics are placed into the mould followed by resin infusion. A vacuum is typically used to draw resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding.

All of these techniques require access to the mould area by the work crew. This is typically achieved by providing temporary structures such as a scaffold on both sides of the mould. In prior art systems, a scaffold or supported platform is placed on either side of the mould structure, typically comprising several vertical tubes transferring the mass of the scaffold to the ground. Alternatively, the mould structure can be lowered into a recess in the ground to allow ground level access by the work crew. Either of these approaches tends to be cumbersome, costly and inflexible. DE102012219267 A1 discloses a wind turbine blade mould scaffold construction, placed on the shop-floor flooring.

It is therefore an object of the present invention to provide a more flexible manufacturing approach for moulding wind turbine blades.

It is another object of the present invention to develop a more cost-efficient and simple wind turbine moulding system.

### Summary of the Invention

The invention is defined by claims 1 and 13.

In a first aspect, the present invention relates to a mould structure for manufacturing a wind turbine blade or parts thereof, the mould structure comprising a scaffold attached to the mould structure, wherein the scaffold is suspended from the mould structure. This has been found to provide a flexible solution both in terms of height adjustment and space requirements. The scaffold of the present invention can be easily installed onto the mould structure and just as easily be removed. Advantageously, existing mould structures can be upgraded with the inventive scaffold.

Typically, the mould structure will comprise a mould surface body and a rigid frame for supporting the mould surface body. The mould surface body will usually be adapted for moulding a shell half of a wind turbine blade. The scaffold is adapted to support one or more workers working from the scaffold or from a platform thereof.

In a preferred embodiment, the scaffold at least partially hovers above ground level. Preferably, the entire scaffold hovers above ground level. The surrounding floor space remains free which allows for using this space for other purposes and for wind turbine blade manufacturing in confined spaces. Overall, a better space utilisation is achieved using the approach of the present invention. Preferably, the lowest point of the scaffold is at least 0.5 metres, more preferably at least 1 metre, such as 2 metres above ground level. In another embodiment, the vertical distance of the scaffold above ground level may vary along the length of the mould structure, in particular for mould for blade shells for pre-bent blades.

According to the invention, the scaffold is rigidly suspended from the mould structure by a plurality of support arms extending from the mould structure. Preferably, such support arms have a substantially horizontal orientation when mounted on the mould structure. The support arms can advantageously be mounted on the rigid frame of the mould structure. It is preferred that each support arm is able to support the edges of two adjacent platform planks of the scaffold.

According to another embodiment of the present invention, each support arm is mounted on a respective bracket which is attached to the mould structure. Advantageously, each bracket is welded to the mould structure, preferably to the rigid frame of the mould structure. This is a flexible and cost-efficient solution also allowing the upgrade of existing mould structures. The brackets may be standard weld brackets known in the art.

According to another embodiment of the present invention, each support arm comprises angular adjustment means for adjusting the inclination angle of the support arm. Such angular adjustment means may take the form of an angular adjustment screw. In this embodiment, part of the screw is driven into the respective support arm while the head of the screw extends beyond the support arm and is in contact with the rigid frame of the mould structure. Being driving the screw further into the support arm (or vice versa), the inclination angle of the support arm can be adjusted. This is useful, for example, in correcting deviations from a substantially horizontal orientation of the support arms to ensure stable footing of the work crew. The mould structure may also comprise a plurality of locking pins, each locking pin being inserted into corresponding through holes of a respective support arm and bracket for fixing the support arm to the bracket.

Preferably, the support arms extend laterally from the mould structure such that they are arranged substantially perpendicular to the longitudinal direction of the mould structure. In a particularly advantageous embodiment each weld bracket comprises a recess, wherein each support arm comprises one or more pins fitting into the recess of the bracket to ensure the correct assembly of the support arms onto the mould structure. This combination of recess and pin may also be used to ensure a substantially perpendicular orientation of the support arms relative to the longitudinal direction of the mould structure.

According to the invention, the scaffold comprises one or more guard rails and platform planks, wherein the platform planks are supported by the support arms. Preferably, the planks, which allow the work crew to walk and stand, have a length of 0.5-3 metres. It is preferred that each support arm supports one or two adjacent platform planks. The platform planks may be fixed to the support arms by bolts and washers.

In one embodiment, the support arms comprise a projecting edge which projects partly over the installed platform planks. This prevents tipping of the platform planks in case attachment means such as bolts or transition plates fail. Such projecting edge may extend at least 5 cm, preferably at least 10 cm, most preferred at least 15 cm, over the edge of each platform plank adjacent to the mould structure when installed, as measured from the plank edge adjacent to the mould structure in a direction perpendicular to the longitudinal direction of the mould structure, i.e. parallel to the orientation of the support arms.

In a preferred embodiment of the present invention, adjacent platform planks are separated by a transition plate for covering gaps and/or differences in height between adjacent platform planks. This was found to be a particularly flexible solution accounting for individual work situations and or/deviations in the geometry of the parts used. Preferably, the transition plates are located on the upper side of the planks.

Typically, the mould structure comprises two scaffolds attached to the mould structure, wherein each of the scaffolds is suspended on opposing sides from the mould structure.

According to another embodiment of the present invention, the mould structure comprises a mould surface body and a rigid frame for supporting the mould surface body. Typically, the rigid frame will comprise a framework of vertically, horizontally and diagonally oriented bars. Preferably, the frame comprises a plurality of planar panels aligned transversely to the longitudinal direction of the mould surface body. Such planar panels may advantageously be supported by the framework of bars.

According to another embodiment of the present invention, the scaffold comprises one or more toe boards. Preferably, toe boards are installed at all open sides of the scaffold.
Advantageously, the width of the scaffold is between 0.5-5 metres

In another aspect, the present invention relates to the use of a hanging scaffold in manufacturing of a wind turbine blade or a part thereof by moulding, wherein the scaffold is suspended from a blade mould structure. The blade mould structure will usually be adapted for moulding a shell half of a wind turbine blade.

As used herein, the term "longitudinal direction" refers to the direction extending along, or parallel to, a longitudinal axis of the blade or shell half to be moulded.

In general, the disclosure relates to moulds having a length of at least 30 metres, and advantageously at least 40 metres, and having a width of at least 2 metres.

It will be understood that any of the above-described features may be combined in any embodiment of the inventive blade as described.

### Detailed description of the Invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 shows a cut-out perspective view of a mould structure according to the present invention,
Fig. 6 shows a perspective view of part of a scaffold according to the present invention,
Fig. 7 shows a perspective view of a weld bracket mounted on a rigid frame of a mould structure according to the present invention,
Fig. 8 shows a side view of part of a scaffold according to the present invention, and
Fig. 9 shows a perspective view of parts of a mould structure according to the present invention.

### Detailed Description

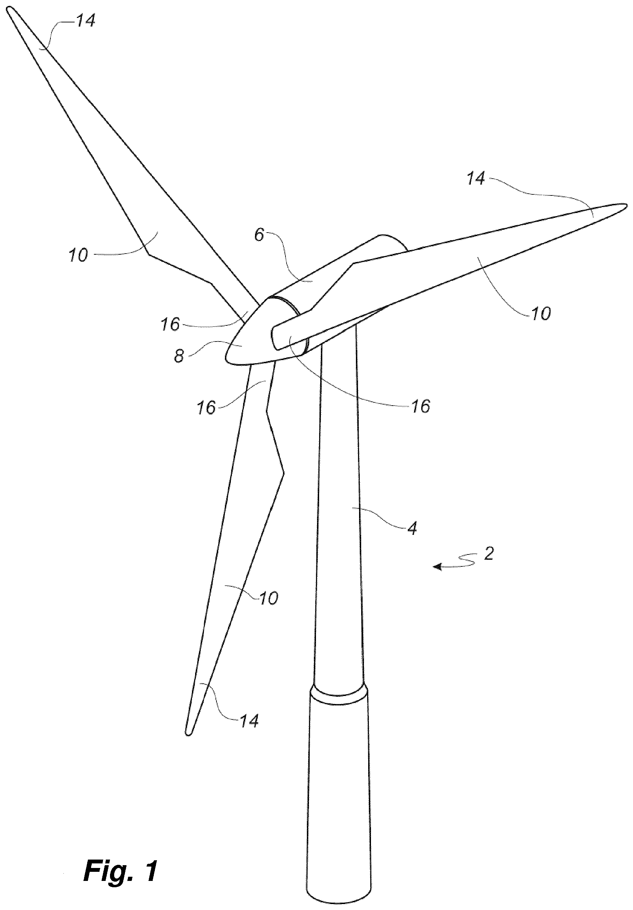

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

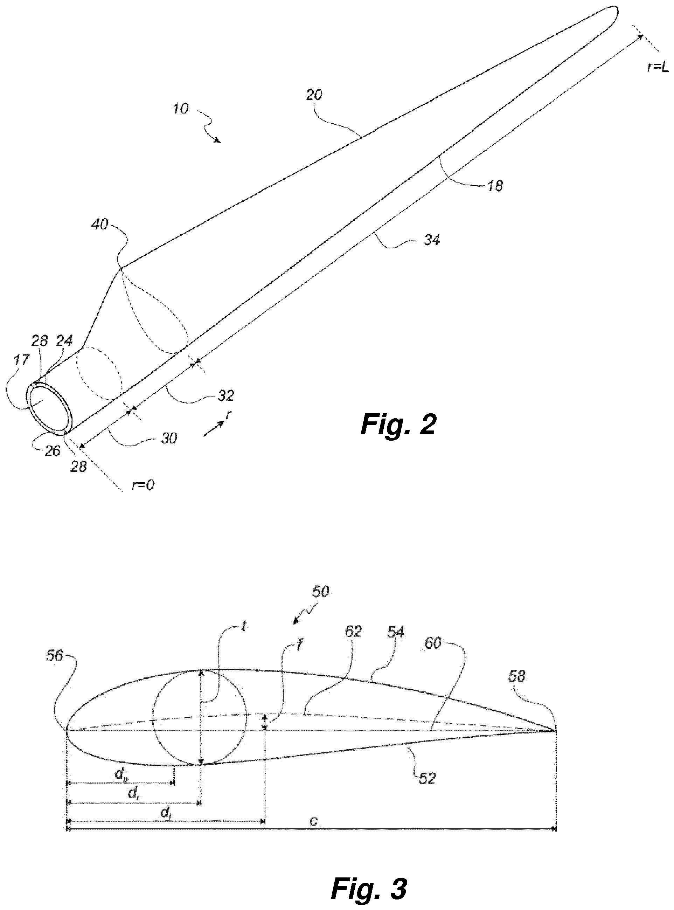

Fig. 2 shows a schematic view of a first embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

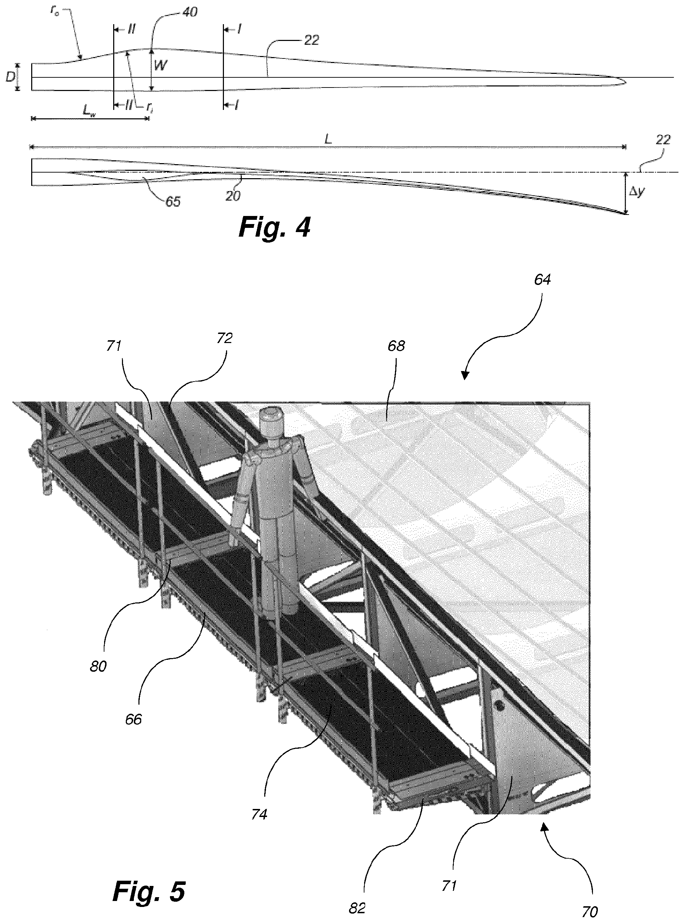

Figs. 3 and 4 depict parameters which are used to explain the geometry of the wind turbine blade according to the invention.

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber *f*, the position *d_{f}* of the maximum camber f, the maximum airfoil thickness t, which is the largest diameter of the inscribed circles along the median camber line 62, the position *dₜ* of the maximum thickness *t,* and a nose radius (not shown). These parameters are typically defined as ratios to the chord length c. Thus, a local relative blade thickness *t*/*c* is given as the ratio between the local maximum thickness *t* and the local chord length c. Further, the position *dₚ* of the maximum pressure side camber may be used as a design parameter, and of course also the position of the maximum suction side camber.

Fig. 4 shows other geometric parameters of the blade. The blade has a total blade length *L*. As shown in Fig. 3, the root end is located at position r = 0, and the tip end located at *r* = *L.* The shoulder 40 of the blade is located at a position r = *L_{w},* and has a shoulder width W, which equals the chord length at the shoulder 40. The diameter of the root is defined as D. The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy,* which corresponds to the out of plane deflection from a pitch axis 22 of the blade.

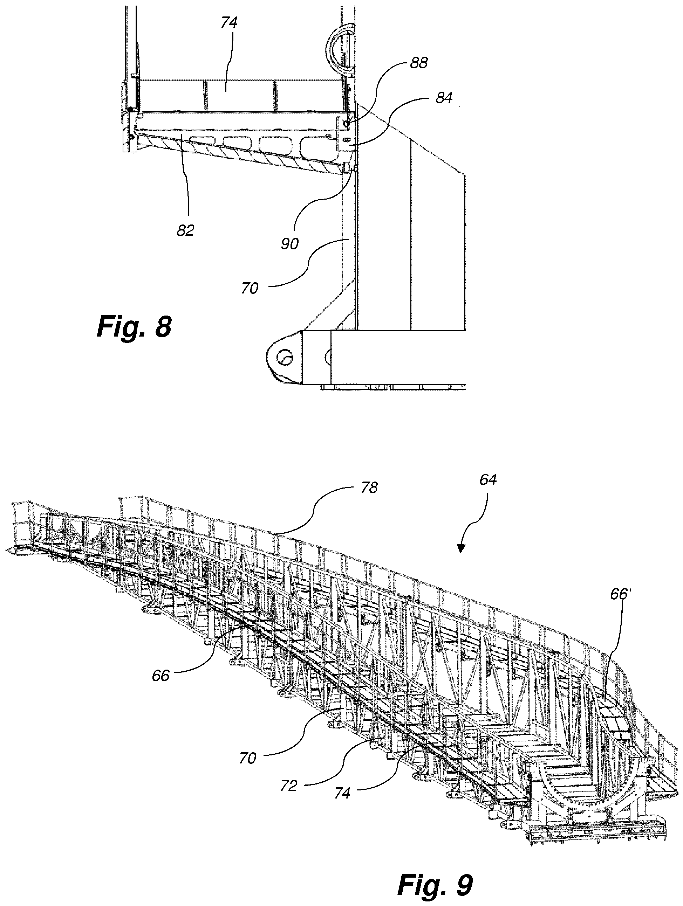

A blade according to the above-discussed figures may be manufactured using a mould structure according to the present invention. Fig. 5 is a perspective view of a mould structure 64 according to the present invention. The mould structure 64 comprises a generally U-shaped or airfoil curved mould surface body 68 for moulding a shell half of a wind turbine blade, said shell half forming a part of an aerodynamic surface of a wind turbine blade. The mould surface body 68 is supported by a rigid frame 70, which comprises a number of parallel planar panels 71 with a cut-out for receiving the mould surface body 68. The frame 70 also comprises a framework of horizontally, vertically and diagonally oriented bars 72 (best seen in Fig. 9) to support the panels 71. A scaffold 66 is attached to the mould structure 64, such that the scaffold 66 is suspended from the mould structure 64.

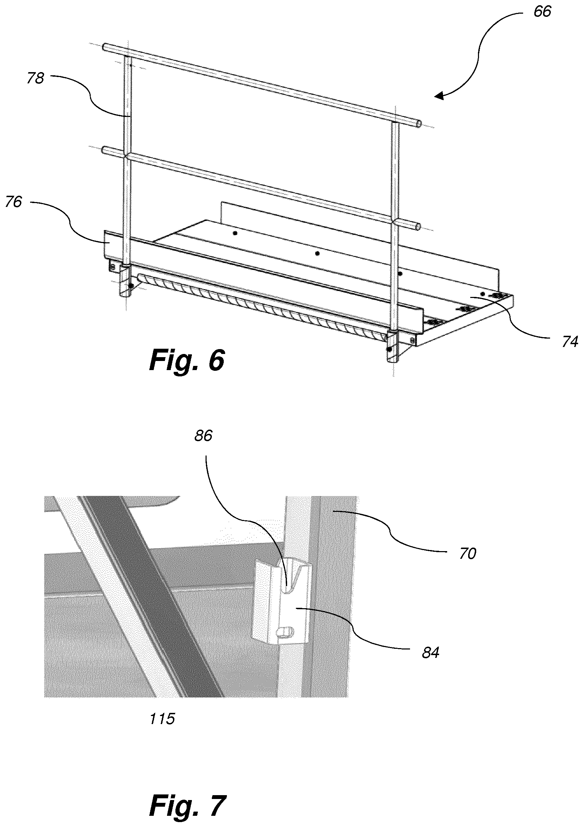

As is best seen in Figs. 5 and 6, the scaffold 66 comprises a number of planks 74 interconnected by transition plates 80 on their upper side and supported by support arms 82, which are attached to the mould structure. The scaffold 66 also comprises a toe boards 76 and guard rails 78 to increase work safety.

The attachment method is further illustrated in Figs. 7 and 8, wherein Fig. 7 shows a bracket 84 which is welded to the frame 70 of the mould structure 64. The bracket 84 comprises a recess 86 for receiving corresponding pins 88 provide on either sides of the support arm 82. This allows for correct placement of the support arm 82 onto the bracket 84 as can be seen in Fig. 8. The arrangement shown in Fig. 8 also comprises an angular adjustment screw 90 for adjusting the inclination angle of the support arm 82 for correcting deviations from a horizontal orientation of the support arm 82. This is useful in ensuring that the work crew has a stable and horizontal footing to allow for all manual operations.

Fig. 9 is a full perspective view showing one embodiment of a mould structure 64 according to the present invention. The mould surface body and the planar panels are not shown in Fig. 9 for better visibility of the remaining parts. Fig. 9 shows an embodiment in which two scaffolds 66, 66' are attached to the mould structure on and along opposing sides of the mould structure 64. The scaffolds 66, 66' are attached to the rigid frame 70 of the mould structure and hover above ground level.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: camber line / median line
- 64: mould structure
- 66: scaffold
- 68: mould surface body
- 70: frame
- 71: planar panel
- 72: bar
- 74: planks
- 76: toe board
- 78: guard rail
- 80: transition plate
- 82: support arm
- 84: bracket
- 86: recess
- 88: pin
- 90: angular adjustment screw
- c: chord length
- *dₜ*: position of maximum thickness
- *d_{f}*: position of maximum camber
- *dₚ*: position of maximum pressure side camber
- f: camber
- *L*: blade length
- *r*: local radius, radial distance from blade root
- *t*: thickness
- Δ*y*: prebend

## Claims

1. A mould structure (64) for manufacturing a wind turbine blade (10) or parts thereof, the mould structure comprising a scaffold (66) attached to the mould structure, wherein the scaffold (66) is rigidly suspended from the mould structure (64) by a plurality of support arms (82) extending from the mould structure, and wherein the scaffold (66) comprises one or more guard rails (78) and platform planks (74), wherein the platform planks (74) are supported by the support arms.

2. A mould structure (64) according to claim 1, wherein the scaffold (66) at least partially hovers above ground level.

3. A mould structure (64) according to any of the preceding claims, wherein each support arm (82) is mounted on a respective bracket (84) which is attached to the mould structure.

4. A mould structure (64) according to claim 3, wherein each bracket (84) is welded to the mould structure.

5. A mould structure (64) according to any of the preceding claims, wherein each support arm (82) comprises angular adjustment means (90) for adjusting the inclination angle of the support arm.

6. A mould structure (64) according to any of the preceding claims, wherein the support arms (82) extend laterally from the mould structure such that they are arranged substantially perpendicular to the longitudinal direction of the mould structure (64).

7. A mould structure (64) according to any of the preceding claims, wherein adjacent platform planks (74) are separated by a transition plate (80) for covering gaps and/or differences in height between adjacent platform planks (74).

8. A mould structure (64) according to any of the preceding claims, wherein the length of the platform planks (74) is 0.5-3 metres.

9. A mould structure (64) according to any of the preceding claims comprising two scaffolds (66, 66') attached to the mould structure, wherein each of the scaffolds (66, 66') is suspended on opposing sides from the mould structure (64).

10. A mould structure (64) according to any of the preceding claims, wherein the mould structure (64) comprises a mould surface body (68) and a rigid frame (70) for supporting the mould surface body (68).

11. A mould structure (64) according to claim 10, wherein the frame (70) comprises a plurality of planar panels (71) aligned transversely to the longitudinal direction of the mould surface body (68).

12. A mould structure (64) according to any of the preceding claims, wherein the scaffold (66) comprises one or more toe boards (76).

13. Use of a hanging scaffold (66) in manufacturing of a wind turbine blade (10) or a part thereof by moulding, wherein the scaffold (66) is rigidly suspended from the mould structure (64) by a plurality of support arms (82) extending from the mould structure, and wherein the scaffold (66) comprises one or more guard rails (78) and platform planks (74), wherein the platform planks (74) are supported by the support arms.

## Patentansprüche

1. Formkonstruktion (64) zum Herstellen eines Windkraftanlagenflügels (10) oder Teile davon, wobei die Formkonstruktion eine an der Formkonstruktion befestigte Arbeitsbühne (66) umfasst, wobei die Arbeitsbühne (66) durch eine Vielzahl sich von der Formkonstruktion erstreckender Tragarme (82) starr an der Formkonstruktion (64) aufgehängt ist und wobei die Arbeitsbühne (66) ein oder mehrere Geländer (78) und Plattformbretter (74) umfasst, wobei die Plattformbretter (74) von den Tragarmen getragen werden.

2. Formkonstruktion (64) nach Anspruch 1, wobei die Arbeitsbühne (66) mindestens teilweise über Bodenhöhe schwebt.

3. Formkonstruktion (64) nach einem der vorangehenden Ansprüche, wobei die Tragarme (82) jeweils auf einer entsprechenden Konsole (84) angebracht sind, die an der Formkonstruktion befestigt ist.

4. Formkonstruktion (64) nach Anspruch 3, wobei die Konsolen (84) jeweils an die Formkonstruktion geschweißt sind.

5. Formkonstruktion (64) nach einem der vorangehenden Ansprüche, wobei die Tragarme (82) jeweils ein Winkelverstellmittel (90) zum Verstellen des Neigungswinkels des Tragarms umfassen.

6. Formkonstruktion (64) nach einem der vorangehenden Ansprüche, wobei sich die Tragarme (82) derart seitlich von der Formkonstruktion erstrecken, dass sie im Wesentlichen senkrecht zu der Längsrichtung der Formkonstruktion (64) angeordnet sind.

7. Formkonstruktion (64) nach einem der vorangehenden Ansprüche, wobei benachbarte Plattformbretter (74) durch eine Übergangsplatte (80) getrennt sind, um Zwischenräume und/oder Höhenunterschiede zwischen benachbarten Plattformbrettern (74) abzudecken.

8. Formkonstruktion (64) nach einem der vorangehenden Ansprüche, wobei die Länge der Plattformbretter (74) 0,5-3 Meter beträgt.

9. Formkonstruktion (64) nach einem der vorangehenden Ansprüche, umfassend zwei an der Formkonstruktion befestigte Arbeitsbühnen (66, 66'), wobei die Arbeitsbühnen (66, 66') jeweils auf gegenüberliegenden Seiten an der Formkonstruktion (64) aufgehängt sind.

10. Formkonstruktion (64) nach einem der vorangehenden Ansprüche, wobei die Formkonstruktion (64) einen Formoberflächenkörper (68) und ein starres Gerüst (70) zum Tragen des Formoberflächenkörpers (68) umfasst.

11. Formkonstruktion (64) nach Anspruch 10, wobei das Gerüst (70) eine Vielzahl von ebenen Platten (71) umfasst, die quer zu der Längsrichtung des Formoberflächenkörpers (68) ausgerichtet sind.

12. Formkonstruktion (64) nach einem der vorangehenden Ansprüche, wobei die Arbeitsbühne (66) ein oder mehrere Bordbretter (76) umfasst.

13. Verwendung einer hängenden Arbeitsbühne (66) beim Herstellen eines Windkraftanlagenflügels (10) oder eines Teils davon durch Formen, wobei die Arbeitsbühne (66) durch eine Vielzahl sich von der Formkonstruktion erstreckender Tragarme (82) starr an der Formkonstruktion (64) aufgehängt ist, und wobei die Arbeitsbühne (66) ein oder mehrere Geländer (78) und Plattformbretter (74) umfasst, wobei die Plattformbretter (74) von den Tragarmen getragen werden.

## Revendications

1. Structure de moule (64) servant dans la fabrication d'une pale d'éolienne (10) ou de parties de celle-ci, la structure de moule comportant un échafaudage (66) attaché à la structure de moule, dans laquelle l'échafaudage (66) est suspendu de manière rigide par rapport à la structure de moule (64) par une pluralité de bras de support (82) s'étendant depuis la structure de moule, et dans laquelle l'échafaudage (66) comporte un ou plusieurs garde-corps (78) et des planches de plateforme (74), dans laquelle les planches de plateforme (74) sont supportées par les bras de support.

2. Structure de moule (64) selon la revendication 1, dans laquelle l'échafaudage (66) flotte au moins partiellement au-dessus du niveau du sol.

3. Structure de moule (64) selon l'une quelconque des revendications précédentes, dans laquelle chaque bras de support (82) est monté sur une console respective (84) qui est attachée à la structure de moule.

4. Structure de moule (64) selon la revendication 3, dans laquelle chaque console (84) est soudée à la structure de moule.

5. Structure de moule (64) selon l'une quelconque des revendications précédentes, dans laquelle chaque bras de support (82) comporte un moyen d'ajustement angulaire (90) servant à ajuster l'angle d'inclinaison du bras de support.

6. Structure de moule (64) selon l'une quelconque des revendications précédentes, dans laquelle les bras de support (82) s'étendent dans le sens latéral depuis la structure de moule de telle sorte qu'ils sont agencés de manière sensiblement perpendiculaire par rapport à la direction longitudinale de la structure de moule (64).

7. Structure de moule (64) selon l'une quelconque des revendications précédentes, dans laquelle des planches de plateforme adjacentes (74) sont séparées par une plaque de transition (80) servant à recouvrir des vides et/ou des différences de hauteur entre des planches de plateforme adjacentes (74).

8. Structure de moule (64) selon l'une quelconque des revendications précédentes, dans laquelle la longueur des planches de plateforme (74) mesure de 0,5 à 3 mètres.

9. Structure de moule (64) selon l'une quelconque des revendications précédentes, comportant deux échafaudages (66, 66') attachés à la structure de moule, dans laquelle chacun des échafaudages (66, 66') est suspendu au niveau de côtés opposés par rapport à la structure de moule (64).

10. Structure de moule (64) selon l'une quelconque des revendications précédentes, dans laquelle la structure de moule (64) comporte un corps de surface de moule (68) et un cadre rigide (70) servant à supporter le corps de surface de moule (68).

11. Structure de moule (64) selon la revendication 10, dans laquelle le cadre (70) comporte une pluralité de panneaux plans (71) alignés de manière transversale par rapport à la direction longitudinale du corps de surface de moule (68).

12. Structure de moule (64) selon l'une quelconque des revendications précédentes, dans laquelle l'échafaudage (66) comporte un ou plusieurs garde-pieds (76).

13. Utilisation d'un échafaudage suspendu (66) servant dans la fabrication d'une pale d'éolienne (10) ou d'une partie de celle-ci par moulage, dans laquelle l'échafaudage (66) est suspendu de manière rigide par rapport à la structure de moule (64) par une pluralité de bras de support (82) s'étendant depuis la structure de moule, et dans laquelle l'échafaudage (66) comporte un ou plusieurs garde-corps (78) et des planches de plateforme (74), dans laquelle les planches de plateforme (74) sont supportées par les bras de support.
